# EUROPEAN PATENT APPLICATION

(11) **EP 4 358 216 A1**
(43) Date of publication of application: **24.04.2024**
(21) Application number: 23813543.8
(22) Date of filing: 25.08.2023
(51) Int. Cl.: H01M 10/0525

(54) **HIGH-ENTROPY POSITIVE ELECTRODE MATERIAL, AND PREPARATION METHOD THEREFOR AND USE THEREOF**

(30) Priority: 31.08.2022 CN 202211053932
(71) Applicant: Tianjin B&M Science And Technology Co., Ltd., Tianjin 300384 (CN)
(72) Inventor: LI, Honglei, Binhai New Area Tianjin 300384 (CN); CHEN, Zhiyu, Binhai New Area Tianjin 300384 (CN); JI, Changyin, Binhai New Area Tianjin 300384 (CN); LV, Fei, Binhai New Area Tianjin 300384 (CN); XU, Ning, Binhai New Area Tianjin 300384 (CN)
(74) Representative: Ström & Gulliksson AB
(86) International application number: PCT/CN2023/114964
(87) International publication number: WO 2024/046228

(57) **Abstract**

The present disclosure relates to a high-entropy cathode material and its preparation method and application, belonging to the technical field of lithium secondary batteries. The present disclosure provides a high-entropy cathode material, which comprises an inner core and a carbon coating layer, wherein the material of the inner core comprises Li₁₊ₓ(M_{0.5}Mn_{0.1}Ni_{0.1}Co_{0.1}Cr_{0.1}Fe_{0.1})₁₋ₓO_{2-y}F_{y}, which has a crystal structure of cubic phase and a space group of Fm-3m, wherein M is selected from one of Mn, Ti, Zr, Sn, Nb, V and Mo, 0<x≤0.5, 0<y≤1, and the carbon coating layer is a carbon layer coating on the surface of the inner core. The present disclosure constructs a high-entropy cathode material with a double anionic rock-salt structure by rationally designing transition metal components and adding fluorine element, which effectively improves the lithium ion transmission kinetic properties of the high-entropy cathode material and increases the voltage and capacity retention rate during a cycle. In addition, the carbon layer coating on the surface of the inner core greatly reduces the charge transfer resistance of the high-entropy cathode material and improves its rate performance.

## Description

This application claims priority to Chinese Patent Application No. 202211053932.3, titled "HIGH-ENTROPY POSITIVE ELECTRODE MATERIAL AND PREPARATION METHOD AND APPLICATION THEREOF", filed on August 31, 2022 with the China National Intellectual Property Administration, which is incorporated herein by reference in its entirety.

### FIELD

The present disclosure relates to the technical field of lithium secondary battery and in particular to a high-entropy positive electrode material and preparation method and application thereof.

### BACKGROUND

In recent years, the rapid development of new energy vehicles has put forward higher requirement for the energy density of a lithium secondary battery, and low-capacity positive electrode materials have become a primary factor restricting the development of lithium-ion batteries. Currently, the discharge specific capacity of most positive electrode materials that can be industrialized is less than 200mAh·g⁻¹. Therefore, exploring a new positive electrode material with low cost, high energy density and good safety has become an important task at present.

A lithium-rich manganese-based layered positive electrode material (LLO) has received widespread attention from researchers due to its high specific capacity above 250mAh·g⁻¹ and high operating voltage of 4.8V. However, due to an irreversible oxygen evolution in a first cycle, the LLO material has problems such as low first Coulomb efficiency and severe voltage attenuation, which restricts a commercial application of the LLO material.

A new lithium-rich oxide positive electrode material (DRX) with a cationic disordered rock-salt structure has similar chemical composition (Li₁₊ₓM₁₋ₓO₂) and ultra-high specific capacity as the LLO material, and the irreversible capacity loss in the first cycle is greatly reduced, so the initial Coulombic efficiency is much higher than that of LLO materials. A migration mode of lithium ions in DRX materials is mainly in a form of jumping from one octahedral site to another adjacent octahedral site through a transitional tetrahedral site. A diffusion channel is divided into n-TM channels (n=0, 1, 2) according to a number of transition metals in the tetrahedral site. The migration of lithium ions depends on the height of the tetrahedral and the number of transition metals in the crystal environment. Different diffusion channels have different migration energy barriers. Therefore, lithium ion transport kinetic properties and thermodynamic properties of the DRX materials are closely related to types of transition metals in the materials and their chemical environment.

However, during a charging process of the new lithium-rich oxide positive electrode material (DRX) with a cationic disordered rock-salt structure, some oxygen ions are detached from a crystal lattice, causing capacity attenuation and voltage attenuation during a cycle. In addition, a loss of oxygen leads to the densification of part of the crystal lattice in the material structure, inhibiting the transmission of electrons and lithium ions, resulting in poor rate performance.

### SUMMARY

Based on this, it is necessary to provide a high-entropy positive electrode material and preparation method and application thereof, which can improve cycle stability and rate performance.

In order to achieve the above purpose, the present disclosure adopts following technical solutions.

In one aspect of the present disclosure, a high-entropy positive electrode material is provided. The high-entropy positive electrode material comprises an inner core and a carbon coating layer. A material of the inner core comprises Li₁₊ₓ(M_{0.5}Mn_{0.1}Ni_{0.1}Co_{0.1}Cr_{0.1}Fe_{0.1})₁₋ₓO_{2-y}F_{y}, which has a crystal structure of cubic phase and a space group of Fm-3m, wherein M is selected from one of Mn, Ti, Zr, Sn, Nb, V and Mo, 0 < x≤0.5, 0<y≤1, and the carbon coating layer is a carbon layer coating on a surface of the inner core.

In some embodiments, the high-entropy positive electrode material has a specific surface area of 1m²·g⁻¹ to 30m²·g⁻¹.

In some embodiments, the high-entropy positive electrode material has a primary particle size of less than 500 nm.

In some embodiments, the high-entropy positive electrode material has a particle size D50 of 3µm to 15µm.

In some embodiments, the carbon layer has a thickness of less than 50 nm.

In another aspect of the present disclosure, a method for preparing a high-entropy positive electrode material is provided. The method comprises following steps:
S1, dispersing and grinding a solid phase compound in a liquid medium to obtain a mixed slurry, wherein the solid phase compound comprises a lithium source, a metal oxide, a fluoride and a carbon source;
S2, drying the mixed slurry to obtain a precursor;
S3, calcining the precursor in a protective atmosphere, crushing and sieving to obtain a high-entropy positive electrode material;
wherein the high-entropy positive electrode material comprises an inner core and a carbon coating layer, wherein a material of the inner core comprises Li₁₊ₓ(M_{0.5}Mn_{0.1}Ni_{0.1}Co_{0.1}Cr_{0.1}Fe_{0.1})₁₋ₓO_{2-y}F_{y}, which has a crystal structure of cubic phase and a space group of Fm-3m, wherein M is selected from one of Mn, Ti, Zr, Sn, Nb, V and Mo, 0<x≤0.5, 0<y≤1, and the carbon coating layer is a carbon layer coating on a surface of the inner core.

In some embodiments, the mass of the carbon source in step S1 accounts for 1.0% to 10.0% of the mass of the solid phase compound.

In some embodiments, the mass ratio of the solid phase compound to the liquid phase medium in step S1 is in a range of 1: (0.5 to 2).

In some embodiments, the liquid medium in step S1 comprises one or more of water, methanol, ethanol, ethylene glycol and isopropyl alcohol.

In some embodiments, the mixed slurry in step S1 has a solid particle size D50 of less than or equal to 0.5µm.

In some embodiments, the mixed slurry in step S1 has a solid particle size D100 of less than 1.0 µm.

In some embodiments, the lithium source in step S1 comprises one or more of Li₂CO₃, LiOH, Li₂SO₄, LiCl and LiNO₃.

In some embodiments, the metal oxide in step S1 comprises one or more of ZrO₂, TiO₂, Nb₂O₅, V₂O₅, MoOs, SnO₂, MnO₂, Mn₂O₃, Mn₃O₄, MnO, NiO, Ni₂O₃, Co₃O₄, CoO, Cr₂O₃ and Fe₂O₃.

In some embodiments, the fluoride in step S1 comprises NH₄F and/or LiF.

In some embodiments, the carbon source in step S1 comprises one or more of glucose, sucrose, chitosan, citric acid, acrylic acid, glycine and EDTA (ethylenediaminetetraacetic acid).

In some embodiments, the precursor in step S2 has a particle size D50 of 3µm to 15µm.

In some embodiments, the precursor in step S2 has a particle size D100 of less than 50µm.

In some embodiments, the precursor in step S2 has a content of H₂O of less than 5wt%.

In some embodiments, the sieving in step S3 is performed by using a sieve of 200 mesh to 350 mesh.

In some embodiments, the drying in step S2 is spray drying, and the spray drying has the following process conditions: a liquid input rate of 0.2L·min⁻¹ to 5L·min⁻¹, a carrier gas rate of 20L·min⁻¹ to 200L·min⁻¹, an inlet air temperature of 100°C to 300°C, and an outlet air temperature of 80°C to 200°C.

In some embodiments, the calcination in step S3 comprises following two stages:
a first stage: a calcination temperature of 300 °C to 600 °C, a calcination time of 2h to 8h, a heating rate of 1.0 °C·min⁻¹ to 5.0 °C·min⁻¹, and a gas inlet velocity of 0.5m³·h⁻¹ to 5m³·h⁻¹;
a second stage: a calcination temperature of 700 °C to 1000 °C, a calcination time of 10h to 20h, a heating rate of 1.0 °C·min⁻¹ to 5.0 °C·min⁻¹, and a gas inlet velocity of 0.5m³·h⁻¹ to 5m³·h⁻¹.

In some embodiments, the crushing in step S3 is selected from at least one of mechanical crushing and airflow crushing.

In another aspect of the present disclosure, a cathode plate is provided. The cathode plate comprises the above-mentioned high-entropy cathode material or the high-entropy cathode material obtained by the above-mentioned preparation method.

In another aspect of the present disclosure, a battery comprising the above-mentioned cathode plate is provided.

In another aspect of the present disclosure, an electronic device comprising the above-mentioned battery is provided.

Compared with traditional technology, the above-mentioned high-entropy cathode material and its making method and applications have following advantages:
(1) By rationally designing transition metal components and adding fluorine element, a high-entropy cathode material with a double anionic rock-salt structure is constructed, which effectively improves lithium ion transport kinetic properties of the high-entropy cathode material and improves the voltage and capacity retention rate during a cycle; in addition, the carbon layer coating the surface of the inner core greatly reduces a charge transfer resistance of the high-entropy cathode material and improves its rate performance.
(2) By optimizing the preparation process of the high-entropy cathode material, the surface of the inner core is coated with a carbon layer. The cathode material synthesized by this preparation method has a single phase, small particle size, and uniform distribution, and is suitable for industrial scale-up experiments.

### BRIEF DESCRIPTION OF THE DRAWINGS

Figure 1 is an SEM image of the high-entropy cathode material in Example 1 of the present disclosure;
Figure 2 is a TEM image of the high-entropy cathode material in Example 1 of the present disclosure;
Figure 3 is an XRD pattern of the high-entropy cathode material in Example 1 of the present disclosure;
Figure 4 is a comparison chart of charge and discharge curves of the lithium secondary battery of the high-entropy cathode material prepared in Example 1 of the present disclosure under a current density condition of 50mA·g⁻¹ in first three cycles; a. first cycle; b. second cycle; c. third cycle;
Figure 5 is a comparison chart of a lithium secondary battery cycle performance of the high-entropy cathode materials prepared in Example 1 and Comparative Examples 1 to 2 of the present disclosure;
Figure 6 is a comparison chart of a lithium secondary battery rate performance of the high-entropy cathode materials prepared in Example 1 and Comparative Examples 1 to 2 of the present disclosure.

### DETAILED DESCRIPTION OF EMBODIMENTS

In order to make the purpose, technical solutions and advantages of the present disclosure clearly, the present disclosure will be further described in detail below in conjunction with examples. It should be understood that the specific examples described here are only configured to explain the present disclosure and are not intended to limit the present disclosure.

In the description of the present disclosure, unless otherwise defined, professional terms and words that are not explicitly stated have the same meanings as commonly understood by those skilled in the art, and are common knowledge among those skilled in the art. Methods that are not explicitly stated are the same as those commonly understood by those skilled in the art. The term "more" in the present disclosure means at least two, such as two, three, and the like, unless otherwise clearly and specifically limited.

In the present disclosure, the technical features described in open terms include closed technical solutions composed of the listed features, and also include open technical solutions comprising the listed features.

A high-entropy oxide is usually composed of five or more elements in an equiatomic ratio or close to the equiatomic ratio. By sharing the same atomic sites, a joint lattice is formed and arranged randomly in the crystal, tending to generate a single-phase solid solution structure exhibiting material properties that are far superior to traditional oxides, such as higher structural stability and dielectric constant. These properties promote an application of the high-entropy oxide in the field of energy storage.

Traditional technologies mostly focus on the synthesis and preparation of high-entropy oxide-based DRX materials, which have limited improvement in electrochemical performance, especially rate performance. Therefore, it is necessary to design and develop a high-entropy cathode material with a new rock-salt structure, optimize the synthesis process, and promote the commercial application of similar material.

An embodiment of the present disclosure provides a high-entropy cathode material. The high-entropy cathode material comprises an inner core and a carbon coating layer. The material of the inner core comprises Li₁₊ₓ(M_{0.5}Mn_{0.1}Ni_{0.1}Co_{0.1}Cr_{0.1}Fe_{0.1})₁₋ₓO_{2-y}F_{y}, which has a crystal structure of cubic phase and a space group of Fm-3m, wherein M is selected from one of Mn, Ti, Zr, Sn, Nb, V and Mo, 0 < x≤0.5, 0<y≤1, and the carbon coating layer is a carbon layer coating on the surface of the inner core.

The above-mentioned high-entropy cathode material is constructed by rationally designing transition metal components and adding fluorine element to construct a high-entropy cathode material with a double anionic rock-salt structure, which effectively improves the lithium ion transport kinetic performance of the DRX material and improves the voltage and capacity retention rate during the cycling process, and the carbon layer coating on the surface of the inner core greatly reduces its charge transfer resistance and improves its rate performance. It can be understood that x can be 0.1, 0.12, 0.15, 0.18, 0.2, 0.22, 0.25, 0.28, 0.3, 0.32, 0.35, 0.38, 0.4, 0.42, 0.45, 0.48 or 0.5, and x can also be other values between 0 and 0.5, y can be 0.01, 0.02, 0.05, 0.08, 0.1, 0.12, 0.15, 0.18, 0.2, 0.22, 0.25, 0.28, 0.3, 0.32, 0.35, 0.38, 0.4, 0.42, 0.45, 0.48, 0.5, 0.52, 0.55, 0.58, 0.6, 0.62, 0.65, 0.68, 0.7, 0.72, 0.75, 0.78, 0.8, 0.82, 0.85, 0.88, 0.9, 0.92, 0.95, 0.98 or 1, and y can also be other values between 0 and 1.

In some embodiments, the high-entropy cathode material has a specific surface area of 1m²·g⁻¹ to 30m²·g⁻¹. It can be understood that the specific surface area of the high-entropy cathode material can be any value between 1m²·g⁻¹ and 30m²·g⁻¹, for example, it can be 1m²·g⁻¹, 3m²·g⁻¹, 5m²·g⁻¹, 7m²·g⁻¹, 9m²·g⁻¹, 11m²·g⁻¹, 13m²·g⁻¹, 15m²·g⁻¹, 17m²·g⁻¹, 20m²·g⁻¹, 22m²·g⁻¹, 25 ²·g⁻¹, 28m²·g⁻¹, 30m²·g⁻¹, and the like.

In some embodiments, the high-entropy cathode material has a primary particle size of less than 500 nm. It can be understood that the primary particle size of the high-entropy cathode material includes, but is not limited to, 1nm, 2nm, 3nm, 4nm, 5nm, 7nm, 10nm, 15nm, 20nm, 30nm, 40nm, 50nm, 70nm, 90nm, 100nm, 150nm, 200nm, 250nm, 300nm, 350nm, 400nm, 450nm or 490nm, and the like; the primary particle size of the high-entropy cathode material includes, but is not limited to, other values between 0 and 500nm.

In some embodiments, the high-entropy cathode material has a particle size D50 of 3µm to 15µm. It can be understood that the particle size D50 of the high-entropy cathode material can be 3µm, 3.5µm, 4µm, 4.5µm, 5µm, 5.5µm, 6µm, 6.5µm, 7µm, 7.5µm, 8µm, 8.5µm, 9µm, 9.5µm, 10µm, 10.5µm, 11µm, 11.5µm, 12µm, 12.5µm, 13µm, 13.5µm, 14µm, 14.5µm or 15µm. The particle size D50 of the high-entropy cathode material can also be other values between 3 and 15µm.

In some embodiments, the carbon layer has a thickness of less than 50 nm.

It should be noted that the carbon layer can be amorphous carbon, and the carbon layer can be in a continuous state or a discontinuous state. The thickness of the carbon layer can be 0.1nm, 0.5nm, 1nm, 2nm, 3nm, 4nm, 5nm, 6nm, 7nm, 8nm, 9nm, 10nm, 12nm, 15nm, 18nm, 20nm, 25nm, 30nm, 35nm, 40nm, 45nm or 50nm, and the like. The thickness of the carbon layer can also be other values between 0 and 50nm.

Another embodiment of the present disclosure provides a method for preparing a high-entropy cathode material. The preparation method comprises following steps.
S1, dispersing and grinding a solid phase compound in a liquid medium to obtain a mixed slurry, wherein the solid phase compound comprises a lithium source, a metal oxide, a fluoride and a carbon source;
S2, drying the mixed slurry to obtain a precursor;
S3, calcining the precursor in a protective atmosphere, and crushing and sieving to obtain a high-entropy cathode material;
Wherein the high-entropy cathode material comprises an inner core and a carbon coating layer, wherein a material of the inner core comprises Li₁₊ₓ(M_{0.5}Mn_{0.1}Ni_{0.1}Co_{0.1}Cr_{0.1}Fe_{0.1})₁₋ₓO_{2-y}F_{y}, which has a crystal structure of cubic phase and a space group of Fm-3m, wherein M is selected from one of Mn, Ti, Zr, Sn, Nb, V and Mo, 0<x≤0.5, 0<y≤1, and the carbon coating layer is a carbon layer coating on a surface of the inner core.

The above-mentioned preparation method optimizes the preparation process of high-entropy cathode material and realizes that the surface of the inner core is coated with a carbon layer. The material synthesized by this preparation method has a single phase, small particle size, and uniform distribution, and is suitable for industrial scale-up experiments, and the carbon layer coated on the surface of the inner core greatly reduces the charge transfer resistance of the high-entropy cathode material and improves its rate performance; the above preparation method constructs a high-entropy cathode material with a double anionic rock-salt structure by rationally designing the transition metal components and adding fluorine, which effectively improves the lithium ion transport dynamics properties of the DRX material and improves the voltage and capacity retention rate during cycling. It can be understood that x can be 0.1, 0.12, 0.15, 0.18, 0.2, 0.22, 0.25, 0.28, 0.3, 0.32, 0.35, 0.38, 0.4, 0.42, 0.45, 0.48 or 0.5, and x can also be other values between 0 and 0.5, y can be 0.01, 0.02, 0.05, 0.08, 0.1, 0.12, 0.15, 0.18, 0.2, 0.22, 0.25, 0.28, 0.3, 0.32, 0.35, 0.38, 0.4, 0.42, 0.45, 0.48, 0.5, 0.52, 0.55, 0.58, 0.6, 0.62, 0.65, 0.68, 0.7, 0.72, 0.75, 0.78, 0.8, 0.82, 0.85, 0.88, 0.9, 0.92, 0.95, 0.98 or 1, y can also be other values between 0 and 1.

In some embodiments, the mass of the carbon source in step S1 accounts for 1.0% to 10.0% of the mass of the solid phase compound. It can be understood that the ratio of the mass of the carbon source to the mass of the solid phase compound in step S1 can be 1.0%, 1.5%, 2.0%, 2.5%, 3.0%, 3.5%, 4.0%, 4.5%, 5.0%, 5.5%, 6.0%, 6.5%, 7.0%, 7.5%, 8.0%, 8.5%, 9.0%, 9.5% or 10.0%. In step S1, the ratio of the mass of the carbon source to the mass of the solid phase compound can also be other values between 1.0% and 10.0%.

In some embodiments, the mass ratio of the solid phase compound to the liquid phase medium in step S1 is 1: (0.5 to 2). It can be understood that the mass ratio of the solid phase compound to the liquid phase medium in step S1 can be 1:0.5, 1:0.6, 1:0.7, 1:0.8, 1:0.9, 1:1, 1:1.2, 1:1.3, 1:1.4, 1:1.5, 1:1.6, 1:1.7, 1:1.8, 1:1.9 or 1:2. The mass ratio of the solid phase compound to the liquid phase medium in step S1 can also be other ratio values between 1: (0.5 to 2).

In some embodiments, the liquid medium in step S1 comprises one or more of water, methanol, ethanol, ethylene glycol and isopropyl alcohol.

In some embodiments, the mixed slurry in step S1 has a particle size D50 of less than or equal to 0.5µm. It can be understood that the particle size D50 of the mixed slurry in step S1 can be 0.02µm, 0.05µm, 0.07µm, 0.1µm, 0.12µm, 0.15µm, 0.17µm, 0.2µm, 0.22µm, 0.25µm, 0.27µm, 0.3µm, 0.32µm, 0.35µm, 0.37µm, 0.4µm, 0.42µm, 0.45µm, 0.47µm or 0.5µm, or other values between 0 and 0.5µm.

In some embodiments, the solid phase in the mixed slurry in step S1 has a particle size D100 of less than 1.0µm. It can be understood that the particle size D100 of the solid phase in the mixed slurry in step S1 can be 0.01µm, 0.02µm, 0.03µm, 0.04µm, 0.05µm, 0.08µm, 0.1µm, 0.15µm, 0.2µm, 0.25µm, 0.3µm, 0.4µm, 0.5µm, 0.6µm, 0.7µm, 0.8µm, 0.9µm or 1.0µm, and the like.

In some embodiments, the lithium source in step S1 comprises one or more of Li₂CO₃, LiOH, Li₂SO₄, LiCl and LiNO₃.

In some embodiments, the metal oxide in step S1 comprises one or more of ZrO₂, TiO₂, Nb₂O₅, V₂O₅, MoOs, SnO₂, MnO₂, Mn₂O₃, Mn₃O₄, MnO, NiO, Ni₂O₃, Co₃O₄, CoO, Cr₂O₃ and Fe₂O₃.

In some embodiments, the fluoride in step S1 comprises NH₄F and/or LiF.

In some embodiments, the carbon source in step S1 comprises one or more of glucose, sucrose, chitosan, citric acid, acrylic acid, glycine and EDTA.

In some embodiments, the precursor in step S2 has a particle size D50 of 3µm to 15µm. It can be understood that the particle size D50 of the precursor in step S2 can be any value between 3µm and 15µm, for example, it can be 3µm, 3.5µm, 4µm, 4.5µm, 5µm, 5.5µm, 6µm, 6.5µm, 7µm, 7.5µm, 8µm, 8.5µm, 9µm, 9.5µm, 10µm, 10.5µm, 11µm, 11.5µm, 12µm, 12.5µm, 13µm, 13.5µm, 14µm, 14.5µm or 15µm, and the like.

In some embodiments, the precursor in step S2 has a particle size D100 of less than 50 µm. It can be understood that the particle size D100 of the precursor in step S2 can be 0.1µm, 0.5µm, 1µm, 2µm, 3µm, 5µm, 8µm, 10µm, 12µm, 15µm, 18µm, 20µm, 25µm, 30µm, 35µm, 40µm, 45µm or 50µm.

In some embodiments, the precursor in step S2 has a content of H₂O of less than 5wt%. It can be understood that the content of H₂O in the precursor in step S2 can be 0.01wt%, 0.03wt%, 0.05wt%, 0.08wt%, 0.1wt%, 0.15wt%, 0.2wt%, 0.22wt%, 0.25wt%, 0.28wt%, 0.3wt%, 0.32wt%, 0.35wt%, 0.38wt%, 0.4wt%, 0.42wt%, 0.45wt%, 0.48wt%, 0.5wt%, 1wt%, 1.5wt%, 2wt%, 2.5wt%, 3wt%, 3.5wt%, 4wt%, 4.5wt% or 5wt%.

In some embodiments, the sieving in step S3 is performed by a sieve of 200 mesh to 350 mesh. For example, the sieve mesh can be 200 mesh, 220 mesh, 240 mesh, 260 mesh, 280 mesh, 300 mesh, 325 mesh or 350 mesh, and the like.

In some embodiments, the drying in step S2 is spray drying. The process conditions of the spray drying comprise: a liquid input rate of 0.2L·min⁻¹ to 5L·min⁻¹, a carrier gas rate of 20L·min⁻¹ to 200L·min⁻¹, an inlet gas temperature of 100 °C to 300 °C, and an outlet gas temperature of 80 °C to 200 °C. It can be understood that the liquid inlet rate can be 0.2L·min⁻¹, 0.5L·min⁻¹, 1L·min⁻¹, 1.5L·min⁻¹, 2L·min⁻¹, 2.5L·min⁻¹, 3L·min⁻¹, 3.5L·min⁻¹, 4L·min⁻¹, 4.5L·min⁻¹ or 5L·min⁻¹, and the like; the carrier gas rate can be 20L·min⁻¹, 30L·min⁻¹, 40L·min⁻¹, 50L·min⁻¹, 60L·min⁻¹, 70L·min⁻¹, 80L·min⁻¹, 90L·min⁻¹, 100L·min⁻¹, 150L·min⁻¹ or 200L·min⁻¹, and the like; the inlet air temperature can be 100 °C, 120 °C, 140 °C, 160 °C, 180 °C, 200 °C, 220 °C, 240 °C, 260 °C, 280 °C or 300 °C, and the like; the outlet air temperature can be 80 °C, 90 °C, 100 °C, 110 °C, 120 °C, 130 °C, 150 °C, 170 °C, 185 °C or 200 °C, and the like.

In some embodiments, the calcination in step S3 comprises following two stages.

In the first stage, a calcination temperature of 300 °C to 600 °C, a calcination time of 2h to 8h, a heating rate of 1.0 °C·min⁻¹ to 5.0 °C·min⁻¹, and a gas inlet velocity of 0.5m³·h⁻¹ to 5m³·h⁻¹.

In the second stage, a calcination temperature of 700 °C to 1000 °C, a calcination time of 10h to 20h, a heating rate of 1.0 °C·min⁻¹ to 5.0 °C·min⁻¹, and a gas inlet velocity of 0.5m³·h⁻¹ to 5m³·h⁻¹.

It can be understood that the calcination temperature in the first stage includes, but is not limited to, 300 °C, 320 °C, 340 °C, 360 °C, 380 °C, 400 °C, 420 °C, 440 °C, 460 °C, 480 °C, 500 °C, 520 °C, 540 °C, 560 °C, 580 °C or 600 °C, and the like; the calcination time of the first stage includes, but is not limited to, 2h, 3h, 4h, 5h, 6h, 7h or 8h, and the like; the heating rate of the first stage includes, but is not limited to, 1.0 °C·min⁻¹, 1.5 °C·min⁻¹, 2.0 °C·min⁻¹, 2.5 °C·min⁻¹, 3.0 °C·min⁻¹, 3.5 °C·min⁻¹, 4.0 °C·min⁻¹, 4.5 °C·min⁻¹ or 5.0 °C·min⁻¹; the air intake rate in the first stage includes, but is not limited to, 0.5m³·h⁻¹, 1m³·h⁻¹, 1.5m³·h⁻¹, 2m³·h⁻¹, 2.5m³·h⁻¹ , 3m³·h⁻¹, 3.5m³·h⁻¹, 4m³·h⁻¹, 4.5m³·h⁻¹ or 5m³·h⁻¹.

It can be understood that the calcination temperature in the second stage includes, but is not limited to, 700 °C, 720 °C, 740 °C, 760 °C, 780 °C, 800 °C, 820 °C, 840 °C, 860 °C, 880 °C, 900 °C, 920 °C, 940 °C, 960 °C, 980 °C or 1000 °C, and the like; the calcination time of the second stage includes, but is not limited to, 10h, 11h, 12h, 13h, 14h, 15h, 16h, 17h, 18h, 19h or 20h, and the like; the heating rate in the second stage includes, but is not limited to, 1.0 °C·min⁻¹, 1.5 °C·min⁻¹, 2.0 °C·min⁻¹, 2.5 °C·min⁻¹, 3.0 °C·min⁻¹, 3.5 °C·min⁻¹, 4.0 °C·min⁻¹, 4.5 °C·min⁻¹ or 5.0 °C·min⁻¹; the gas inlet velocity in the second stage includes, but is not limited to, 0.5m³·h⁻¹, 1m³·h⁻¹, 1.5m³·h⁻¹, 2m³·h⁻¹, 2.5m³·h⁻¹, 3m³·h⁻¹, 3.5m³·h⁻¹, 4m³·h⁻¹, 4.5m³·h⁻¹ or 5m³·h⁻¹, and the like.

In some embodiments, the protective atmosphere in step S3 comprises at least one of nitrogen or argon gas.

In some embodiments, the crushing in step S3 is selected from at least one of mechanical crushing or airflow crushing.

Another embodiment of the present disclosure provides a cathode plate, comprising the above-mentioned high-entropy cathode material or the high-entropy cathode material obtained by the above-mentioned preparation method.

Another embodiment of the present disclosure provides a battery comprising the above-mentioned cathode plate.

It should be noted that the battery of the present disclosure can be assembled from a cathode plate, a negative electrode sheet, a separator and an electrolyte. The negative electrode sheet comprises a negative electrode current collector and a negative electrode active layer disposed on the surface of the negative electrode current collector. The negative electrode active layer comprises one or more of artificial graphite, natural graphite, silicon carbon, hard carbon and lithium titanate, the separator can be made of polypropylene as a base material, and the electrolyte can be an electrolyte commonly used in this field composed of organic solvents, lithium salts and additives.

Another embodiment of the present disclosure provides an electronic device comprising the above-mentioned battery.

It should be noted that the above-mentioned battery can be configured as a power supply or energy storage unit for electronic devices. The above-mentioned electronic devices include, but are not limited to, mobile devices, electric vehicles, home appliances, and the like. The mobile devices include mobile phones, laptops, tablet computers, digital cameras, and floor sweepers, air purifiers, vacuum cleaners, and the like. The electric vehicles include pure electric vehicles, hybrid electric vehicles, plug-in hybrid electric vehicles, electric bicycles, and the like.

The present disclosure can be further described in detail below in conjunction with specific examples and comparative examples.

### Example 1

The high-entropy cathode material was prepared as follows.

In step S1, 446.4g Li₂CO₃ (excess 4wt% to compensate for the volatilization loss of lithium during high-temperature calcination), 511.9g ZrO₂, 61.3g MnO₂, 62.1g NiO, 69.7g Co₂O₃, 63.8g Cr₂O₃, 67.1g Fe₂O₃, 74.1g NH₄F and 50g glucose were weighed and added into 1800mL deionized water and ground with a sand mill to obtain a mixed slurry.

In step S2, the above mixed slurry was pumped into a spray drying equipment through a peristaltic pump. The liquid inlet rate was set to 1.5L·min⁻¹, the carrier gas rate was set to 80L·min⁻¹, the inlet air temperature was set to 240 °C, and the outlet air temperature was set to 100 °C, and the liquid in the mixed slurry was evaporated at high temperature to obtain a precursor.

In step S3, the above precursor was placed in a nitrogen atmosphere furnace for two-step calcination. First, the above precursor was calcined at 400 °C for 5 hours, wherein the heating rate was 2.5 °C·min⁻¹ and the air intake rate was 2m³·h⁻¹; then the temperature was raised to 950 °C for calcination for 16 hours, the heating rate was 2.5 °C·min⁻¹, and the gas inlet velocity is 2m³·h⁻¹; after completion, the product was cooled in the furnace, and then mechanically crushed and sieved with 325 mesh to obtain the high-entropy cathode material with a double anionic rock-salt structure, wherein the material of the inner core was Li_{1.16}(Zr_{0.5}Mn_{0.1}Ni_{0.1}Co_{0.1}Cr_{0.1}Fe_{0.1})_{0.84}O_{1.8}F_{0.2}.

### Example 2

The high-entropy cathode material was prepared as follows.

In step S1, 629.2g Li₂SO₄ (excess 4wt% to compensate for the volatilization loss of lithium during high-temperature calcination), 347.7g MnO₂, 48.7g Mn₃O₄, 65.5g Ni₂O₃, 66.3g Co₂O₃, 60.7g Cr₂O₃, 63.9g Fe₂O₃, 26g LiF and 30g glucose were weighed and added into 1500mL deionized water and ground with a sand mill to obtain a mixed slurry.

In step S2, the above mixed slurry was pumped into a spray drying equipment through a peristaltic pump. The liquid inlet rate was set to 2.5L·min⁻¹, the carrier gas rate was set to 100L·min⁻¹, the inlet air temperature was set to 250 °C, and the outlet air temperature was set to 120 °C, and the liquid in the mixed slurry was evaporated at high temperature to obtain the precursor.

In step S3, the above precursor was placed in a nitrogen atmosphere furnace for two-step calcination. First, the above precursor was calcined at 450 °C for 5 hours, wherein the heating rate was 4 °C·min⁻¹ and the air intake rate was 2.5m³·h⁻¹; then the temperature was raised to 980 °C for calcination for 10 hours, the heating rate was 4 °C·min⁻¹, and the air intake rate was 2.5m³·h⁻¹; after completion, the product was cooled in the furnace, and then mechanically crushed and sieved with 325 mesh to obtain the high-entropy cathode material with a double anionic rock-salt structure, wherein the material of the inner core was Li_{1.20}(Mn_{0.6}Ni_{0.1}Co_{0.1}Cr_{0.1}Fe_{0.1})_{0.80}O_{1.9}F_{0.1}.

### Example 3

The high-entropy cathode material was prepared as follows.

In step S1, 810.9g LiNO₃ (excess 4wt% to compensate for the volatilization loss of lithium during high-temperature calcination), 347.7g TiO₂, 65.8g MnO₂, 64.3g NiO, 65.2g CoO, 66.1g Cr₂O₃, 69.5g Fe₂O₃, 74.1g NH₄F and 60g glucose were weighed and added into 2000mL deionized water and ground with a sand mill to obtain a mixed slurry.

In step S2, the above mixed slurry was pumped into a spray drying equipment through a peristaltic pump. The liquid inlet rate was set to 2L·min⁻¹, the carrier gas rate was set to 40L·min⁻¹, the inlet gas temperature was set to 250 °C, and the outlet gas temperature was set to 100 °C, and the liquid in the mixed slurry was evaporated at high temperature to obtain the precursor.

In step S3, the above precursor was placed in a nitrogen atmosphere furnace for two-step calcination. First, the above precursor was calcined at 500 °C for 4 hours, wherein the heating rate was 3 °C·min⁻¹ and the gas inlet velocity was 3m³·h⁻¹; then the temperature was raised to 900 °C for calcination for 20 hours, the heating rate was 3 °C min⁻¹, and the gas inlet velocity was 3m³·h⁻¹; after completion, the product was cooled in the furnace, and then mechanically crushed and sieved with 300 mesh to obtain the high-entropy cathode material with a double anionic rock-salt structure, wherein the material of the inner core was Li_{1.13}(Ti_{0.5}Mn_{0.1}Ni_{0.1}Co_{0.1}Cr_{0.1}Fe_{0.1})_{0.87}O_{1.8}F_{0.2}.

### Example 4

The high-entropy cathode material was prepared as follows.

In step S1, 546g LiOH (excess 4wt% to compensate for the volatilization loss of lithium during high-temperature calcination), 341g V₂O₅, 48.9g MnO₂, 61.4g Ni₂O₃, 62.2g Co₂O₃, 57g Cr₂O₃, 59.9g Fe₂O₃, 185.2g NH₄F and 30g glucose were weighed and added into 1000mL deionized water and ground with a sand mill to obtain a mixed slurry.

In step S2, the above mixed slurry was pumped into a spray drying equipment through a peristaltic pump. The liquid inlet rate was set to 0.8L·min⁻¹, the carrier gas rate was set to 50L·min⁻¹, the inlet gas temperature was set to 220 °C, and the outlet gas temperature was set to 100 °C, and the liquid in the mixed slurry was evaporated at high temperature to obtain the precursor.

In step S3, the above precursor was placed in a nitrogen atmosphere furnace for two-step calcination. First, the above precursor was calcined at 600 °C for 4 hours, wherein the heating rate was 4 °C·min⁻¹ and the air intake rate was 3m³·h⁻¹; then the temperature was raised to 800 °C for calcination for 20 hours, the heating rate was 4 °C·min⁻¹, and the air intake rate was 3m³·h⁻¹; after completion, the product was cooled in the furnace, and then mechanically crushed and sieved with 300 mesh to obtain the high-entropy cathode material with a double anionic rock-salt structure, wherein the material of the inner core was Li_{1.25}(V_{0.5}Mn_{0.1}Ni_{0.1}Co_{0.1}Cr_{0.1}Fe_{0.1})_{0.75}O_{1.5}F_{0.5}.

### Example 5

The high-entropy cathode material was prepared as follows.

In step S1, 461.8g Li₂CO₃ (excess 4wt% to compensate for the volatilization loss of lithium during high-temperature calcination), 583.6g MoO₃, 48.7g Mn₃O₄, 59.1g NiO, 66.3g Co₂O₃, 60.7g Cr₂O₃, 63.9g Fe₂O₃, 185.2g NH₄F and 100g glucose were weighed and added into deionized water with 2000mL and ground with a sand mill to obtain a mixed slurry.

In step S2, the above mixed slurry was pumped into a spray drying equipment through a peristaltic pump. The liquid inlet rate was set to 4L·min⁻¹, the carrier gas rate was set to 80L·min⁻¹, the inlet air temperature was set to 280 °C, and the outlet air temperature was set to 80 °C, and the liquid in the mixed slurry was evaporated at high temperature to obtain the precursor.

In step S3, the above precursor was placed in a nitrogen atmosphere furnace for two-step calcination. First, the above precursor was calcined at 600 °C for 3 hours, wherein the heating rate was 5 °C·min⁻¹ and the gas inlet velocity was 2m³·h⁻¹; then the temperature was raised to 1000 °C for calcination for 20 hours, the heating rate was 5 °C·min⁻¹, and the gas inlet velocity was 2m³·h⁻¹; after completion, the product was cooled in the furnace, and then mechanically crushed and sieved with 325 mesh to obtain the high-entropy cathode material with a double anionic rock-salt structure, wherein the material of the inner core was Li_{1.20}(Mo_{0.5}Mn_{0.1}Ni_{0.1}Co_{0.1}Cr_{0.1}Fe_{0.1})_{0.80}O_{1.5}F_{0.5}.

### Example 6

The high-entropy cathode material was prepared as follows.

In step S1, 428.1g LiOH (excess 4wt% to compensate for the volatilization loss of lithium during high-temperature calcination), 327.8g TiO₂, 51.2g Mn₃O₄, 67.2g Ni₂O₃, 68g Co₂O₃, 62.3g Cr₂O₃, 65.5g Fe₂O₃, 52g LiF and 20g glucose were weighed and added into 2000mL deionized water and ground with a sand mill to obtain a mixed slurry.

In step S2, the above mixed slurry was pumped into a spray drying equipment through a peristaltic pump. The liquid inlet rate was set to 2L·min⁻¹, the carrier gas rate was set to 100L·min⁻¹, the inlet gas temperature was set to 280 °C, and the outlet gas temperature was set to 120 °C, and the liquid in the mixed slurry was evaporated at high temperature to obtain the precursor.

In step S3, the above precursor was placed in a nitrogen atmosphere furnace for two-step calcination. First, the above precursor was calcined at 600 °C for 2 hours, wherein the heating rate was 5 °C •min-1 and the gas inlet velocity was 5m³·h⁻¹; then the temperature was raised to 850 °C for calcination for 20 hours, the heating rate was 5 °C·min⁻¹, and the gas inlet velocity was 5m³·h⁻¹; after completion, the product was cooled in the furnace, and then mechanically crushed and sieved with 325 mesh to obtain the high-entropy cathode material with a double anionic rock-salt structure, wherein the material of the inner core was Li_{1.18}(Ti_{0.5}Mn_{0.1}Ni_{0.1}Co_{0.1}Cr_{0.1}Fe_{0.1})_{0.82}O_{1.8}F_{0.2}.

### Example 7

The high-entropy cathode material was prepared as follows.

In step S1, 577.2g Li₂CO₃ (excess 4wt% to compensate for the volatilization loss of lithium during high-temperature calcination), 379.8g SnO₂, 19.7g Mn₂O₃, 37g NiO, 37.5g CoO, 38g Cr₂O₃, 40g Fe₂O₃, 370.3g NH₄F and 50g glucose were weighed and added into 1800mL deionized water and ground with a sand mill to obtain a mixed slurry.

In step S2, the above mixed slurry was pumped into a spray drying equipment through a peristaltic pump. The liquid inlet rate was set to 1.75L·min⁻¹, the carrier gas rate was set to 75L·min⁻¹, the inlet air temperature was set to 250 °C, and the outlet air temperature was set to 95 °C, and the liquid in the mixed slurry was evaporated at high temperature to obtain the precursor.

In step S3, the above precursor was placed in a nitrogen atmosphere furnace for two-step calcination. First, the above precursor was calcined at 400 °C for 5 hours, wherein the heating rate was 2.5 °C·min⁻¹ and the gas inlet velocity was 2m³·h⁻¹; then the temperature was raised to 950 °C for calcination for 16 hours, the heating rate was 2.5 °C·min⁻¹, and the gas inlet velocity was 2m³·h⁻¹; after completion, the product was cooled in the furnace, and then mechanically crushed and sieved with 325 mesh to obtain the high-entropy cathode material with a double anionic rock-salt structure, wherein the material of the inner core was Li_{1.5}(Sn_{0.5}Mn_{0.1}Ni_{0.1}Co_{0.1}Cr_{0.1}Fe_{0.1})_{0.5}OF.

### Example 8

Example 8 was basically the same as Example 1 except that the amount of glucose added in step S1 was 150g.

### Comparative Example 1

It was basically the same as Example 1, except that NH₄F was not added in step S1, and a high-entropy cathode material was obtained in step S3, the material of the inner core of which was Li_{1.16}(Zr_{0.5}Mn_{0.1}Ni_{0.1}Co_{0.1}Cr_{0.1}Fe_{0.1})_{0.84}O₂.

### Comparative Example 2

It was basically the same as Example 1 except that glucose was not added in step S1.

### Comparative Example 3

It was basically the same as Example 1 except that 596.4g Li₂CO₃ (excess 4wt% to compensate for the volatilization loss of lithium during high-temperature calcination), 274.3g ZrO₂, 39.1g MnO₂, 33.3g NiO, 37.3g Co₂O₃, 34.2 g Cr₂O₃, 36g Fe₂O₃, 74.1g NH₄F and 50g glucose were weighed and added into 1800mL deionized water and ground with a sand mill to obtain a mixed slurry in step S1.

The material of the inner core of the high-entropy cathode material with a double anionic rock-salt structure obtained in step S3 was Li_{1.55}(Zr_{0.5}Mn_{0.1}Ni_{0.1}Co_{0.1}Cr_{0.1}Fe_{0.1})_{0.45}O_{1.8}F_{0.2}.

### Comparative Example 4

It was basically the same as Example 1 except that 446.4g Li₂CO₃ (excess 4wt% to compensate for the volatilization loss of lithium during high-temperature calcination), 511.9g ZrO₂, 73g MnO₂, 62.1g NiO, 69.7g Co₂O₃, 63.8g of Cr₂O₃, 67.1g of Fe₂O₃, 444.4g of NH₄F and 50g of glucose were weighed and added into 1800mL deionized water and ground with a sand mill to obtain a mixed slurry.

The material of the inner core of the high-entropy cathode material with a double anionic rock-salt structure obtained in step S3 was Li_{1.16}(Zr_{0.5}Mn_{0.1}Ni_{0.1}Co_{0.1}Cr_{0.1}Fe_{0.1})_{0.84}O_{0.8}F_{1.2}.

### Comparative Example 5

It was basically the same as Example 1 except that the amount of glucose added in step S1 was 170g.

### Test Example 1 Physical and Chemical Performance Test

The high-entropy cathode materials prepared in the above-mentioned Examples 1 to 8 and Comparative Examples 1 to 5 were tested for specific surface area, primary particle size, particle size D50, XRD and SEM. The test methods are as follows.
a. specific surface area: the specific surface area of a sample to be tested was tested by a dynamic method. The sample to be tested was placed in a U-shaped tube, and a helium-nitrogen mixed gas with a volume ratio of 1:4 was introduced. After the mixed gas flowed through the sample to be tested, according to the change of gas concentration before and after adsorption, an adsorption capacity of the sample to be tested was obtained.
b. primary particle size: a microscopic morphology of the sample to be tested was obtained by using SEM, and the primary particle size of the material was measured in a same direction.
c. particle size D50: Malvern laser particle size analyzer Mastersizer3000 was utilized to test the particle size distribution of the sample to be tested, and a median particle size D50 of the volume distribution was selected to compare the difference between the sample to be tested.
d. XRD test: Cu-Kα target was used, an emission wavelength λ was 0.1548nm, a scanning voltage was 40kV, a current was 40mA, a step scanning method was used, a scanning speed was 1°/min, and a scanning ranged from 10° to 80°.

**Table 1**

| Group | Specific surface area (m²·g⁻¹) | Primary particle size (nm) | Particle size D50 (µm) |
|---|---|---|---|
| Example 1 | 5.5 | 379 | 11.8 |
| Example 2 | 10.7 | 116 | 12.1 |
| Example 3 | 21.4 | 196 | 3.7 |
| Example 4 | 23.6 | 161 | 5.7 |
| Example 5 | 5.8 | 371 | 13.5 |
| Example 6 | 20.6 | 362 | 5.4 |
| Example 7 | 24.2 | 342 | 6.2 |
| Example 8 | 17.0 | 288 | 11.5 |
| Comparative Example 1 | 1.9 | 168 | 11.7 |
| Comparative Example 2 | 0.2 | 171 | 11.2 |
| Comparative Example 3 | 13.6 | 78 | 10.2 |
| Comparative Example 4 | 13.5 | 179 | 11.0 |
| Comparative Example 5 | 33.0 | 158 | 10.5 |

### Test Example 2 Electrochemical Performance Test

The electrochemical properties of the high-entropy cathode materials prepared in the above-mentioned Examples 1 to 8 and Comparative Examples 1 to 5 were tested in button-type lithium secondary batteries.

The specific production method of lithium secondary battery and its cathode plate was as follows. The high-entropy cathode material powder prepared was mixed with acetylene black and polyvinylidene fluoride according to a mass ratio of 90:5:5, and an appropriate amount of N-methylpyrrolidone was added as a dispersant, then ground into a slurry; then the slurry was evenly applied on an aluminum foil, vacuum dried at 120 °C for 10 hours. Dried pole pieces were rolled by a roller machine , and the aluminum foil was cut by a slicer into circular pole piece with a diameter of 1.3cm, and the loading amount of active material was controlled at about 10mg·cm⁻². Half-cells were assembled in an argon atmosphere glove box with a water partial pressure of ≤0.1ppm and an oxygen partial pressure of ≤0.1ppm. A CR2032 button battery was assembled by using metallic lithium as a counter electrode and using 1M LiPF₆ (FEC/EC/DMC, volume ratio 1:1:1) solution as a electrolyte. A constant current charge and discharge mode was used to perform charge and discharge cycles for 100 cycles at room temperature, where the voltage ranged from 2.0V to 4.6V and the current density was 50mA·g⁻¹ (0.2C rate). The battery rate performance test current density was 50mA·g⁻¹, 500mA·g⁻¹, 1250mA·g⁻¹ and 2500mA·g⁻¹, corresponding to 0.2C, 2C, 5C and 10C respectively.

The data of the initial charge specific capacity, the initial discharge specific capacity, the initial Coulombic efficiency, the capacity retention rate after 100 cycles and the medium voltage attenuation after 100 cycles of discharge the lithium secondary batteries of the high-entropy cathode materials prepared in Examples 1 to 8 and Comparative Examples 1 to 5 are shown in Table 2, and the rate performance data of the lithium secondary battery test of the high-entropy cathode materials prepared in Examples 1 to 8 and Comparative Examples 1 to 5 are shown in Table 3.

**Table 2**

| Group | initial charge specific capacity (mAh·g⁻¹) | initial discharge specific capacity (mAh·g⁻¹) | initial Coulombic efficiency (%) | Capacity retention rate after 100 cycles (%) | Medium voltage attenuation after 100 cycles of discharge (mV) |
|---|---|---|---|---|---|
| Example 1 | 322.8 | 296.3 | 91.8 | 90.1 | 269 |
| Example 2 | 319.0 | 291.9 | 91.5 | 88.2 | 270 |
| Example 3 | 310.2 | 282.6 | 91.1 | 87.2 | 274 |
| Example 4 | 311.7 | 287.1 | 92.1 | 89.7 | 267 |
| Example 5 | 315.7 | 293.9 | 93.1 | 91.4 | 254 |
| Example 6 | 313.1 | 286.8 | 91.6 | 87.8 | 274 |
| Example 7 | 316.6 | 282.1 | 89.1 | 87.4 | 246 |
| Example 8 | 317.6 | 289.0 | 91.0 | 90.4 | 233 |
| Comparative Example 1 | 359.9 | 276.4 | 76.8 | 69.2 | 558 |
| Comparative Example 2 | 362.0 | 290.3 | 80.2 | 57.4 | 578 |
| Comparative Example 3 | 370.5 | 262.4 | 70.8 | 36.2 | 625 |
| Comparative Example 4 | 295.7 | 216.0 | 72.6 | 45.9 | 649 |
| Comparative Example 5 | 295.2 | 243.5 | 82.5 | 60.2 | 458 |

**Table 3**

| | | | | |
|---|---|---|---|---|
| Group | 0.2C Discharge specific capacity (mAh·g⁻¹) | 1C Discharge specific capacity (mAh·g⁻¹) | 2C Discharge specific capacity | 5C Discharge specific capacity (mAh·g⁻¹) |

| | | | (mAh·g⁻¹) | |
|---|---|---|---|---|
| Example 1 | 292.7 | 281.0 | 256.0 | 226.5 |
| Example 2 | 290.0 | 275.7 | 249.6 | 223.0 |
| Example 3 | 283.3 | 270.2 | 253.0 | 239.0 |
| Example 4 | 289.1 | 274.5 | 252.0 | 241.7 |
| Example 5 | 293.4 | 282.7 | 258.3 | 236.6 |
| Example 6 | 288.8 | 276.9 | 253.0 | 229.0 |
| Example 7 | 284.3 | 271.6 | 251.8 | 238.8 |
| Example 8 | 290.5 | 279.8 | 255.6 | 233.5 |
| Comparative Example 1 | 276.6 | 246.3 | 205.3 | 140.6 |
| Comparative Example 2 | 291.8 | 261.7 | 205.8 | 133.7 |
| Comparative Example 3 | 261.3 | 225.6 | 189.4 | 128.6 |
| Comparative Example 4 | 214.6 | 185.5 | 159.5 | 110.9 |
| Comparative Example 5 | 245.2 | 216.2 | 182.4 | 125.6 |

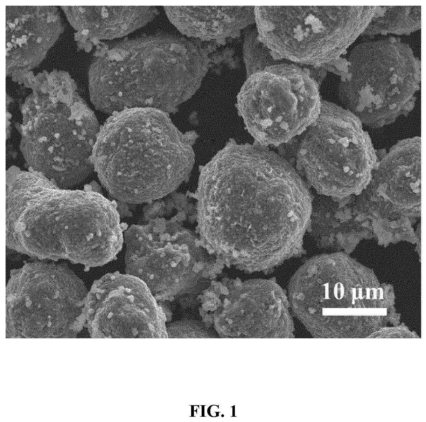

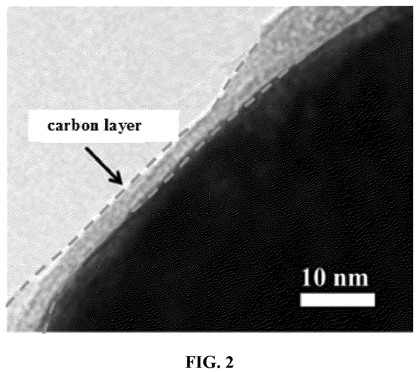

It can be seen from Figures 1 to 2 that the high-entropy cathode material prepared in Example 1 was in a regular spherical shape with a particle size of about 10 µm. The particles in Figure 1 were formed by agglomeration of primary particles. The thickness of the carbon layer in the high-entropy cathode material prepared in Example 1 was less than 10nm.

The high-entropy cathode materials prepared in Example 8 and Comparative Example 5 were also tested by TEM. The thickness of the carbon layer in the high-entropy cathode material prepared in Example 8 was less than 10 nm, while the thickness of the carbon layer in the high-entropy cathode material prepared in Comparative Example 5 was greater than 10nm.

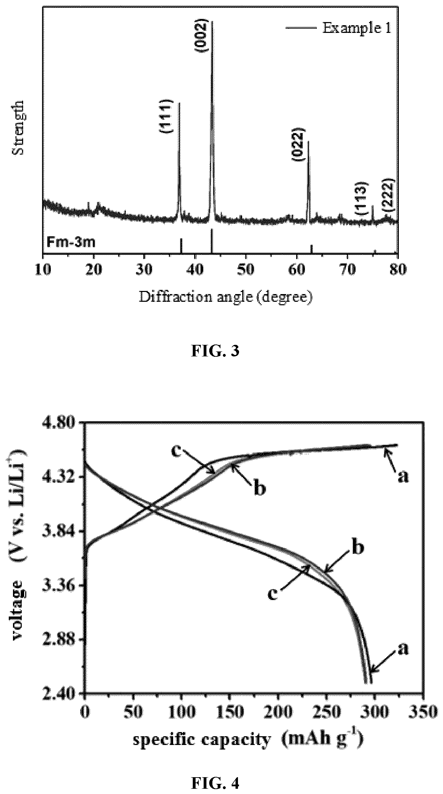

As can be seen from Figure 3, main diffraction peaks of the high-entropy cathode material prepared in Example 1 matched the (111), (002), and (022) crystal planes of the cubic phase Fm-3m space group. In addition, the weak diffraction peaks around 22° may be related to a lithium-rich phase or an amorphous coating carbon layer.

It can be seen from Figure 4 that the charge and discharge curves of the lithium secondary battery of the high-entropy cathode material prepared in Example 1 have a high degree of overlap in the first three cycles, indicating that the capacity attenuation of the high-entropy cathode material prepared in Example 1 was smaller.

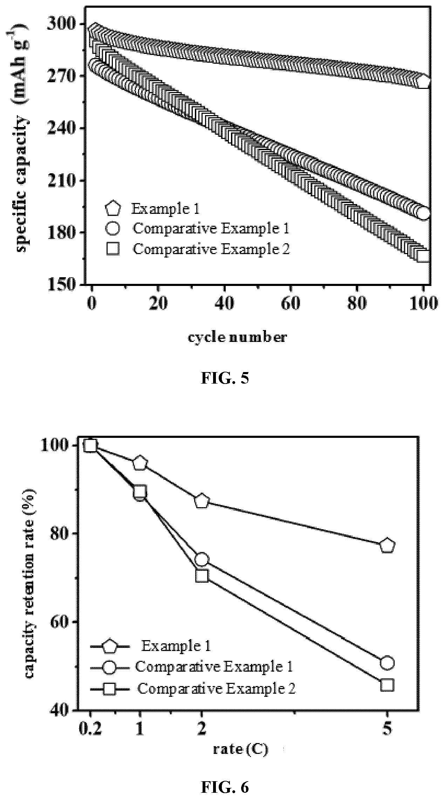

It can be seen from Table 2 and Figure 5 that the high-entropy cathode materials prepared in Examples 1 to 8 exhibited higher initial Coulombic efficiency, and the capacity retention rate and voltage retention after 100 cycles of the high-entropy cathode materials were significantly better than those prepared in Comparative Examples 1 to 5.

As can be seen from Table 3 and Figure 6, the discharge capacity retention rates (5C discharge specific capacity/0.2C discharge specific capacity) of the high-entropy cathode materials prepared in Examples 1 to 8 at a high rate of 5C were all above 75%, which was much higher than that of high-entropy cathode materials prepared in Comparative Examples 1 to 5.

In summary, it shows that the high-entropy cathode material with a double anionic rock-salt structure provided in the present disclosure effectively improves the lithium ion transmission kinetic performance of the DRX material through the reasonable design of the transition metal components and the addition of fluorine element. In addition, the preparation process of high-entropy cathode materials is optimized to realize that the surface of the inner core is coated with a carbon layer, which reduces the charge transfer resistance of high-entropy cathode materials and improves its rate performance.

The technical features of the above-described Examples can be combined in any way. To simplify the description, not all possible combinations of the technical features in the above-described examples are described. However, as long as there is no contradiction in the combination of these technical features, all should be considered to be within the scope of the present disclosure.

The above-mentioned examples only express several implementation modes of the present disclosure, and their descriptions are relatively specific and detailed, but they should not be construed as limiting the scope of the present disclosure. It should be noted that, for those of ordinary skill in the art, several modifications and improvements can be made without departing from the concept of the present disclosure, and these all belong to the protection scope of the present disclosure. Therefore, the scope of protection of the present disclosure should be determined by the appended claims.

## Claims

1. A high-entropy cathode material, comprising: an inner core and a carbon coating layer, wherein a material of the inner core comprises Li₁₊ₓ(M_{0.5}Mn_{0.1}Ni_{0.1}Co_{0.1}Cr_{0.1}Fe_{0.1})₁₋ₓO_{2-y}F_{y}, which has a crystal structure of cubic phase and a space group of Fm-3m, wherein M is selected from one of Mn, Ti, Zr, Sn, Nb, V and Mo, 0<x≤0.5, 0<y≤1, and the carbon coating layer is a carbon layer coating on a surface of the inner core.

2. The high-entropy cathode material according to claim 1, wherein the high-entropy cathode material has at least one of following characteristics:
(1) the high-entropy cathode material has a specific surface area of 1m²·g⁻¹ to 30m²·g⁻¹;
(2) the high-entropy cathode material has a primary particle size of less than 500 nm;
(3) the high-entropy cathode material has a particle size D50 of 3µm to 15µm; and
(4) the carbon layer has a thickness of less than 50 nm.

3. A method for preparing a high-entropy cathode material, comprising following steps:
S1, dispersing and grinding a solid phase compound in a liquid medium to obtain a mixed slurry, wherein the solid phase compound comprises a lithium source, a metal oxide, a fluoride and a carbon source;
S2, drying the mixed slurry to obtain a precursor;
S3, calcining the precursor in a protective atmosphere, crushing and sieving to obtain a high-entropy cathode material;
wherein the high-entropy cathode material comprises an inner core and a carbon coating layer, wherein a material of the inner core comprises Li₁₊ₓ(M_{0.5}Mn_{0.1}Ni_{0.1}Co_{0.1}Cr_{0.1}Fe_{0.1})₁₋ₓO_{2-y}F_{y}, which has a crystal structure of cubic phase and a space group of Fm-3m, wherein M is selected from one of Mn, Ti, Zr, Sn, Nb, V and Mo, 0<x≤0.5, 0<y≤1, and the carbon coating layer is a carbon layer coating on a surface of the inner core.

4. The method according to claim 3, wherein the method has at least one of following characteristics:
(1) a mass of the carbon source in step S1 accounts for 1.0% to 10.0% of a mass of the solid phase compound;
(2) a mass ratio of the solid phase compound to the liquid phase medium in step S1 is 1: (0.5 to 2);
(3) the liquid medium in step S1 comprises one or more of water, methanol, ethanol, ethylene glycol and isopropyl alcohol;
(4) the mixed slurry in step S1 has a solid particle size D50 of less than or equal to 0.5µm;
(5) the mixed slurry in step S1 has a solid particle size D100 of less than 1.0 µm;
(6) the lithium source in step S1 comprises one or more of Li₂CO₃, LiOH, Li₂SO₄, LiCl and LiNO₃;
(7) the metal oxide in step S1 comprises one or more of ZrO₂, TiO₂, Nb₂O₅, V₂O₅, MoO₃, SnO₂, MnO₂, Mn₂O₃, Mn₃O₄, MnO, NiO, Ni₂O₃, Co₃O₄, CoO, Cr₂O₃ and Fe₂O₃;
(8) the fluoride in step S1 comprises NH₄F and/or LiF;
(9) the carbon source in step S1 comprises one or more of glucose, sucrose, chitosan, citric acid, acrylic acid, glycine and ethylenediaminetetraacetic acid (EDTA);
(10) the precursor in step S2 has a particle size D50 of 3µm to 15µm;
(11) the precursor in step S2 has a particle size D100 of less than 50µm;
(12) the precursor in step S2 has a content of H₂O of less than 5wt%;
(13) the sieving in step S3 is performed by a sieve of 200 mesh to 350 mesh.

5. The method according to claim 3, wherein the drying in step S2 is a spray drying, and conditions of the spray drying comprise following conditions: a liquid input rate of 0.2L·min⁻¹ to 5L·min⁻¹, a carrier gas rate of 20L·min⁻¹ to 200L·min⁻¹, an inlet air temperature of 100 °C to 300 °C, and an outlet air temperature of 80 °C to 200 °C.

6. The method according to claim 3, wherein the calcining in step S3 comprises following two stages:
a first stage: a calcination temperature of 300 °C to 600 °C, a calcination time of 2h to 8h, a heating rate of 1.0 °C·min⁻¹ to 5.0 °C·min⁻¹, and a gas inlet velocity of 0.5m·³h⁻¹ to 5m³·h⁻¹;
a second stage: a calcination temperature of 700 °C to 1000 °C, a calcination temperature of 10h to 20h, a heating rate of 1.0 °C·min⁻¹ to 5.0 °C·min⁻¹, and a gas inlet velocity of 0.5m³·h⁻¹ to 5m³·h⁻¹.

7. The method according to any one of claims 3 to 6, wherein the crushing in step S3 is selected from at least one of mechanical crushing and airflow crushing.

8. A cathode plate, comprising the high-entropy cathode material according to any one of claims 1 to 2 or a high-entropy cathode material prepared by the method according to any one of claims 3 to 7.

9. A battery, comprising the cathode plate according to claim 8.

10. An electronic device, comprising the battery according to claim 9.
